# FASCICULE DE BREVET EUROPEEN

(11) **EP 0 410 371 B1**
(45) Date de publication et mention de la délivrance du brevet: **22.03.1995**
(21) Numéro de dépôt: 90114149.9
(22) Date de dépôt: 24.07.1990
(51) Int. Cl.: H04N 7/16, H04N 7/173

(54) **Système de télédistribution**
Fernverteilungssystem
Tele-distribution system

(30) Priorité: 27.07.1989 FR 8910150
(43) Date de publication de la demande: 30.01.1991
(73) Titulaire: LOCATEL S.A., F-92300 Levallois Perret (FR)
(72) Inventeur: Nardot, Jean-Claude, F-92500 Rueil Malmaison (FR); Walczak, Jean-Luc, F-75017 Paris (FR)
(74) Mandataire: Weinmiller, Jürgen

(56) Documents cités:
- EP-A- 0 208 501
- WO-A-81/02961
- US-A- 4 486 773

## Description

La présente invention concerne un système de télédistribution qui permet de régir un ensemble de terminaux raccordés à un réseau de télédistribution.

Les systèmes de télédistribution donnent la possibilité de diffuser simultanément des programmes et des informations de commande sur un même réseau dont les liaisons sont des câbles coaxiaux ou des fibres optiques, par exemple. Un système d'un tel type est décrit, notamment, dans le brevet européen EP-A-0 098 226.

Des systèmes de télédistribution, notamment ceux qui sont utilisés pour la diffusion sélective de programmes de télévision, véhiculent les informations de commande des terminaux en les combinant aux signaux d'un ou de chaque programme diffusé.

D'autres systèmes, utilisés dans le même type d'applications, agissent au niveau des terminaux au moyen des informations de commande en filtrant certains des canaux de transmission susceptibles d'être exploités par ces terminaux. Les documents US-A-4.486.773 et WO-A-8102961 en fournissent une description.

La présente invention a ainsi pour objet un système de télédistribution qui ne présente pas ces limitations et qui s'adapte aux réseaux existants.

Le système de télédistribution selon l'art antérieur comprend une tête de réseau qui produit un signal de programmes, une unité de commande au moins qui produit un signal de commande, un mélangeur qui combine ce signal de programmes et ce signal de commande en un signal combiné pour l'injecter sur un réseau, un ensemble de terminaux raccordés à ce réseau par des liaisons, chacun des terminaux comprenant un circuit de sélection qui achemine le signal combiné à un séparateur, un démodulateur qui reçoit un signal de commande restitué par ce séparateur et produit un signal de contrôle, un circuit récepteur qui convertit les informations émises par une télécommande en un signal utilisateur, un circuit de contrôle qui reçoit le signal de contrôle et le signal utilisateur.

Selon l'invention ce système se caractérise en ce qu'il comprend un circuit de commande d'un récepteur de télévision qui reçoit le signal de programmes issu du séparateur et qui comprend un bus accessible par une connexion bus et une entrée télécommande et en ce que le circuit de contrôle applique un signal de télécommande sur l'entrée de télécommande et /ou un signal d'instruction sur la connexion bus.

Avantageusement, dans le système de télédistribution, chacun des terminaux est identifié par une adresse.

De plus, dans le système de télédistribution, l'unité de commande introduit une adresse dans ce signal de commande. cette adresse précédant une information de commande.

En outre, dans le système de télédistribution, chacun des terminaux comprend des moyens pour reconnaître cette adresse, et recevoir cette information de commande seulement si cette adresse lui correspond.

Dans une variante de réalisation, le Système de télédistribution selon l'invention comprend une voie de retour comprenant un modulateur qui reçoit un message de retour et produit un signal de retour, ce module de sélection injectant ce signal de retour sur le réseau et comprend aussi des moyens pour séparer ce signal de commande et le signal de retour destiné à l'unité de commande.

De plus, dans le Système de télédistribution, un terminal émet un signal de retour suite à une autorisation de l'unité de commande.

Les différents objets et caractéristiques de l'invention seront maintenant exposés de façon plus détaillée dans le cadre d'exemples de réalisation donnés à titre non limitatif en se référant aux figures annexées qui représentent :
- la figure 1, le diagramme d'un système de télédistribution selon l'invention,
- la figure 2, le diagramme d'un terminal du système de télédistribution selon l'invention.

Les éléments présents dans les deux figures porteront la même référence.

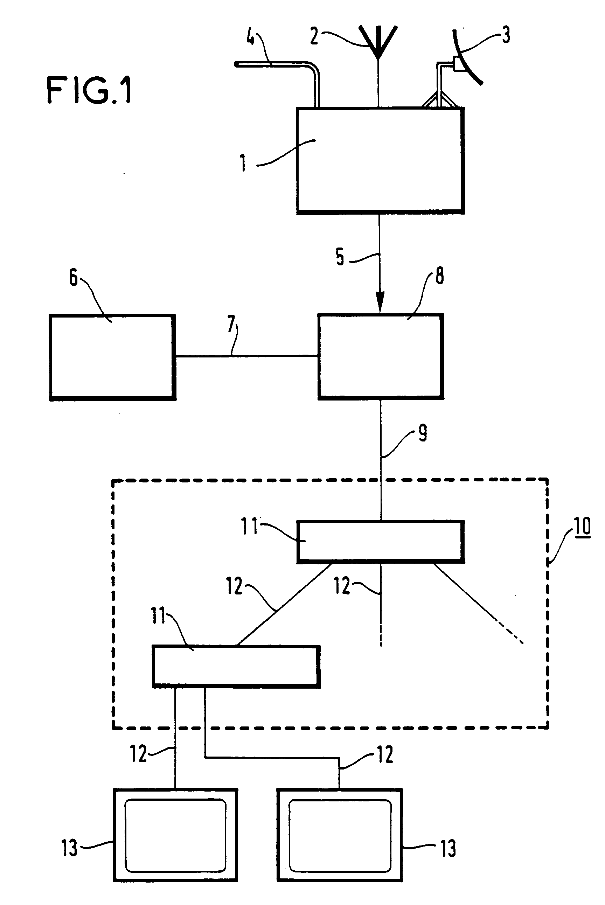

Le système de télédistribution représenté dans la figure 1 comprend une tête de réseau 1 qui reçoit des programmes de différentes sources telles qu'une antenne UHF-VHF 2, une antenne satellite 3, ou un câble 4 et affecte ces programmes à des canaux de transmission qui sont exploitables par les téléviseurs. La tête de réseau 1 produit donc sur sa sortie un signal de programmes 5 qui comprend la totalité des programmes disponibles.

Le système de télédistribution comprend également une unité de commande 6 qui élabore un signal de commande 7, ce signal de commande prenant place sur un canal de transmission qui n'est pas utilisé par la tête de réseau. Le signal de commande 7 résulte d'une information numérique qui a subi une première modulation, de type FSK par exemple, suivi d'une deuxième modulation, FM par exemple, pour l'amener dans la bande de fréquence du canal de transmission. Dans une variante, ce signal de commande 7 résulte de la modulation directe d'une porteuse et prend donc la forme, alternativement, de deux fréquences situées dans la bande de fréquence du canal de transmission.

Le système de télédistribution comprend aussi un mélangeur 8 qui combine le signal de programmes 5 et le signal de commande 7 pour produire un signal combiné 9 qu'il injecte sur le réseau 10. Ce réseau de type connu est essentiellement constitué d'une part de coupleurs 11 qui recoivent un signal d'entrée et produisent en sortie, après une amplification éventuelle, plusieurs signaux identiques au signal d'entrée et d'autre part de liaisons 12 telles que des câbles coaxiaux ou des câbles à fibre optique.

Le système de télédistribution comprend enfin des terminaux 13, tels que des téléviseurs, raccordés au réseau par une liaison 12.

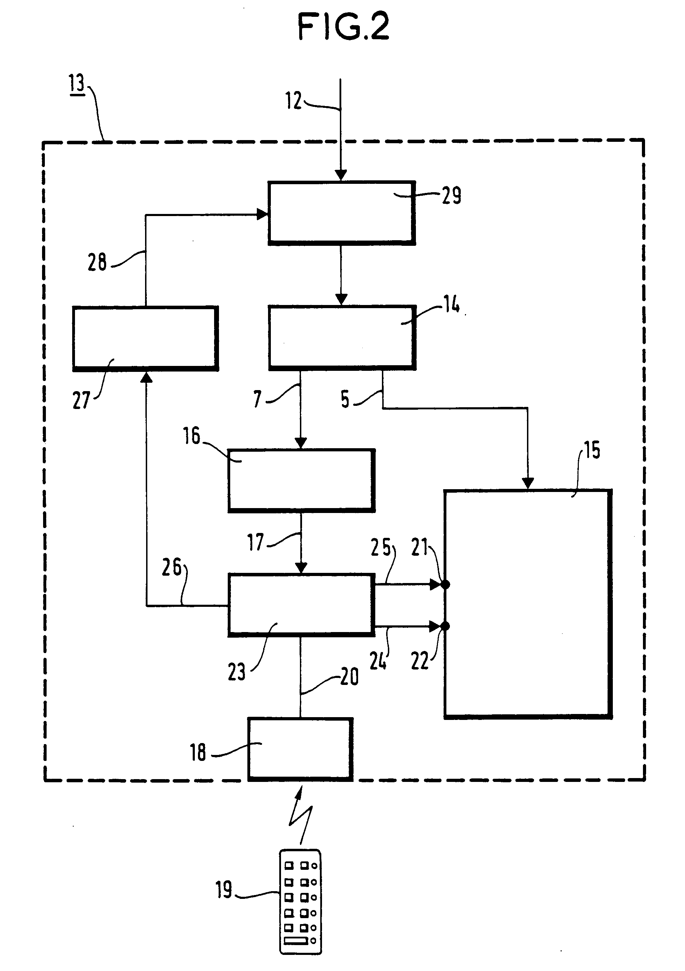

Un terminal 13 représenté dans la figure 2 reçoit le signal combiné 9 par la liaison 12 sur un circuit de sélection 29 le transmettant à un séparateur 14 qui restitue sur deux sorties le signal de programmes 5 et le signal de commande 7. Le terminal comprend un circuit de commande 15 existant dans tous les appareils récents qui regroupe tous les éléments nécessaires à son fonctionnement, il possède donc une entrée vidéo, une prise d'antenne par exemple, qui reçoit le signal de programmes 5. Le signal de commande 7 est appliqué sur l'entrée d'un démodulateur 16 qui effectue les opérations de démodulation symétriques des opérations de modulation qui ont été réalisées dans l'unité de commande 6 pour produire un signal de contrôle 17. Le terminal 13 comprend également un circuit récepteur 18 qui convertit les informations données par l'utilisateur pour la commande du terminal, par une télécommande infrarouge 19 par exemple, en un signal utilisateur 20.

Le circuit de commande 15 du terminal possède un microcontrôleur qui communique avec les différents modules de ce circuit de commande par l'intermédiaire d'un bus, un bus I2C par exemple, accessible par une connexion bus 21. Il comprend également une entrée télécommande 22 qui en configuration standard, reçoit le signal utilisateur 20.

Le terminal 13 comprend également un circuit de contrôle 23 qui reçoit le signal de contrôle 17 et le signal utilisateur 20 et produit un signal de télécommande 24 assimilable par le circuit de commande 15 qu'il applique sur l'entrée télécommande 22 de ce circuit. Il produit aussi un signal d'instruction 25 qu'il applique sur la connexion bus 21 du circuit de commandes. Il est avantageusement composé d'un microprocesseur ou d'un microcontrôleur et d'une mémoire.

Dans une variante de réalisation le système de télédistribution comprend une voie de retour qui permet à un terminal d'émettre des messages à destination de l'unité de commande 6. Le réseau 10 permet de véhiculer des informations dans les deux sens et, notamment, les coupleurs 11 sont bidirectifs. Le circuit de contrôle 23 produit un message de retour 26 qui est transmis à un modulateur 27. Ce modulateur produit sur sa sortie un signal de retour 28 compatible avec le réseau 10 tel qu'un autre canal de transmission inutilisé par la tête de réseau 1 ou bien tel qu'il soit supporté par une porteuse de fréquence inférieure à celle des canaux de transmission, de l'ordre de 5 à 10 par exemple. Ce signal de retour 28 est injecté sur la liaison 12 du réseau par l'intermédiaire d'un circuit de sélection 29. Ce circuit de sélection transmet ainsi le signal combiné 9 uniquement au séparateur 14 et le signal de retour 28 uniquement sur le réseau.

De même, dans cette variante de réalisation, le mélangeur 8 transmet le signal de programmes 5 uniquement sur le réseau, le signal de commande 7 uniquement sur le réseau et le signal de retour 28 uniquement à l'unité de commande 6. La séparation entre signal de commande 7 et signal de retour 28 se fait dans un circuit qui est localisé soit dans l'unité de commande auquel cas un seul lien de connexion est nécessaire entre l'unité de commande 6 et le mélangeur 8, soit dans le mélangeur auquel cas deux liens sont nécessaires.

L'exploitation du système de télédistribution se fait de la manière suivante. Chaque terminal 13 possède une adresse propre qu'il conserve dans la mémoire de son circuit de contrôle 23. Cette adresse peut lui être fournie au moyen de la télécommande 19 par exemple, sous forme codée, pour qu'elle ne soit pas modifiable par un utilisateur non autorisé. Elle peut également lui être communiquée par l'entrée du circuit de sélection 29 au moyen d'un équipement qui produit un signal compatible avec le signal de commande 7.
Le signal de commande 7 émis par l'unité de commande 6 est reçu simultanément par tous les terminaux 13. Il prend la forme, par exemple, d'une transmission série asynchrone au format RS 232. Il comporte l'adresse du destinataire du message suivi d'une information de commande assimilable par le circuit de contrôle 23. Ainsi seul un terminal ayant reconnu son adresse prend en compte cette information de commande. L'unité de commande 6 peut ainsi attribuer une liste d'adresses à un terminal afin qu'il traite les informations faisant suite à chacune des adresses de cette liste. Il est ainsi possible de faire un adressage par groupe de terminaux.

Le circuit de contrôle 23 d'un terminal 13 transmet sur le signal télécommande 24 les informations reçues par le signal utilisateur 20 sous réserve qu'il n'est pas reçu d'ordre l'interdisant. Ainsi l'ensemble des opérations possibles à partir de la télécommande 19 sont contrôlées par l'unité de commande 6. De plus, le circuit de contrôle 23 a accès au bus du circuit de commande 15 par la connexion bus 21.

Dans le cas où le système de télédistribution comporte une voie de retour, un terminal 13 attend une autorisation de l'unité de commande 6 pour émettre un signal de retour 28. Cette autorisation peut lui être accordée pour une durée déterminée; le terminal peut également signaler qu'il a terminé son émission. Le signal de retour 28 comprend des informations émanant de la télécommande 19 ou directement du circuit de contrôle 23.

Le système de télédistribution permet les différentes applications suivantes, au moyen de l'unité de commande 6 :
- l'autorisation d'accès à un programme pour une durée déterminée,
- l'accès aux réglages de confort d'un terminal tels que celui du volume sonore, de la luminosité, du contraste...,
- la mise en veille du terminal,
- la commutation d'un terminal sur un programme déterminé,
- la programmation d'un terminal, c'est-à-dire l'affectation d'un programme à un numéro de chaîne par exemple, ceci par l'intermédiaire du bus du circuit de commande 15,
- l'incrustation des messages visuels ou sonores sur un terminal tel qu'un téléviseur.

On remarquera que le dialogue entre l'unité de commande 6 et un terminal 13 est possible si ce terminal est à l'état de veille, c'est-à-dire si son alimentation n'est pas coupée.

## Revendications

1. Système de télédistribution comprenant une tête de réseau (1) qui produit un signal de programmes (5), une unité de commande (6) au moins qui produit un signal de commande (7), un mélangeur (8) qui combine ce signal de programmes et ce signal de commande en un signal combiné (9) pour l'injecter sur un réseau (10), un ensemble de terminaux (13) raccordés à ce réseau par des liaisons(12), chacun desdits terminaux comprenant un circuit de sélection (29) qui achemine le signal combiné (9) à un séparateur (14), un démodulateur (16) qui reçoit un signal de commande (7) restitué par ce séparateur et produit un signal de contrôle (17), un circuit récepteur (18) qui convertit les informations émises par une télécommande (19) en un signal utilisateur (20), un circuit de contrôle (23) qui reçoit ledit signal de contrôle (17) et ledit signal utilisateur (20) caractérisé en ce qu'il comprend un circuit de commande (15) d'un récepteur de télévision qui reçoit le signal de programmes (5) issu dudit séparateur (14) et qui comprend un bus accessible par une connexion bus (21) et une entrée télécommande (22) et en ce que ledit circuit de contrôle (23) applique un signal de télécommande (24) sur ladite entrée de télécommande (22) et/ou un signal d'instruction (25) sur ladite connexion bus (21).

2. Système de télédistribution selon la revendication 1 caractérisé en ce que chacun desdits terminaux (13) est identifié par une adresse.

3. Sytème de télédistribution selon la revendication précédente caractérisé en ce que ladite unité de commande (6) introduit une adresse dans ledit signal de commande (7), ladite adresse précédant une information de commande.

4. Système de télédistribution selon la revendication précédente caractérisé en ce que chacun desdits terminaux (13) comprend des moyens pour reconnaître ladite adresse, et recevoir ladite information de commande seulement si cette adresse lui correspond.

5. Système de télédistribution selon la revendication précédente caractérisé en ce qu'il comprend une voie de retour comprenant un modulateur (27) qui reçoit un message de retour (26) et produit un signal de retour (28), en ce que ledit module de sélection (29) injecte ce signal de retour sur le réseau (10) et en ce qu'il comprend des moyens pour séparer ledit signal de commande (7) et ledit signal de retour (28) destiné à ladite unité de commande (6).

6. Système de télédistribution selon la revendication précédente caractérisé en ce qu'un terminal (13) émet un signal de retour (28) suite à une autorisation de ladite unité de commande (6).

## Patentansprüche

1. Fernsehverteilsystem mit einem Netzkopf (1), der ein Programmsignal (5) erzeugt, mindestens einer Steuereinheit (6), die ein Steuersignal (7) erzeugt, einer Mischstufe (8), die das Programmsignal und das Steuersignal zu einem kombinierten Signal (9) kombiniert, das in ein Netz (10) eingespeist wird, einer Gruppe von Endgeräten (13), die an dieses Netz über Leitungen (12) angeschlossen sind und die je eine Selektionsschaltung (29), die das kombinierte Signal (9) zu einem Separator (14) lenkt, einen Demodulator (16), der ein im Separator wiedergewonnenes Steuersignal (7) empfängt und ein Kontrollsignal (17) erzeugt, eine Empfangsschaltung (18), die die von einer Fernsteuerung (19) ausgehenden Informationen in ein Benutzersignal (20) umwandelt, und eine Kontrollschaltung (23) aufweist, die das Kontrollsignal (17) und das Benutzersignal (20) empfängt, dadurch gekennzeichnet, daß das System eine Steuerschaltung (15) eines Fernsehempfängers aufweist, die das Programmsignal (5) aus dem Separator (14) empfängt und einen über einen Busanschluß (21) zugänglichen Bus sowie eine Fernsteuereingang (22) enthält, und daß die Kontrollschaltung (23) ein Fernsteuersignal (24) an den Fernsteuereingang (22) und/oder ein Befehlssignal (25) an den Busanschluß (21) anlegt.

2. Fernsehverteilsystem nach Anspruch 1, dadurch gekennzeichnet, daß jedes Endgerät (13) durch eine Adresse identifiziert wird.

3. Fernsehverteilsystem nach Anspruch 2, dadurch gekennzeichnet, daß die Steuereinheit (6) eine Adresse in das Steuersignal (7) einfügt, die einer Steuerinformation vorausgeht.

4. Fernsehverteilsystem nach Anspruch 3, dadurch gekennzeichnet, daß jedes der Endgeräte (13) Mittel aufweist, um diese Adresse zu erkennen und um die Steuerinformation nur dann in Empfang zu nehmen, wenn es seine eigene Adresse erkannt hat.

5. Fernsehverteilsystem nach Anspruch 4, dadurch gekennzeichnet, daß es einen Kanal in Gegenrichtung mit einem Modulator (27) aufweist, der eine Nachricht in Gegenrichtung (26) empfängt und ein Signal in Gegenrichtung (28) erzeugt, und daß die Selektionsschaltung (29) dieses Signal in Gegenrichtung in das Netz (10) einspeist, wobei Mittel vorgesehen sind, um das Steuersignal (7) vom Signal (28) in Gegenrichtung zu trennen, das für die Steuereinheit (6) bestimmt ist.

6. Fernsehverteilsystem nach Anspruch 5, dadurch gekennzeichnet, daß ein Endgerät (13) ein Signal (28) in Gegenrichtung nach einer Freigabe durch die Steuereinheit (6) aussendet.

## Claims

1. Cable TV system comprising a network head end (1) which produces a programme signal (5), at least one control unit (6) which produces a control signal (7), a mixer (8) which combines this programme signal and this control signal into a combined signal (9) to inject it into a network (10), a set of terminals (13) connected to this network by links (12), each of said terminals comprising a selector circuit (29) which routes the combined signal (9) to a splitter (14), a demodulator (16) which receives a control signal (7) output by this splitter and produces a control signal (17), a receiver circuit (18) which converts the information sent by a remote controller (19) into a user signal (20), a control circuit (23) which receives said control signal (17) and said user signal (20), characterised in that it comprises a control circuit (15) of a television receiver which receives the programme signal (5) from said splitter (14) and which comprises a bus accessible via a bus connection (21) and a telecontrol input (22) and in that said control circuit (23) applies a telecontrol signal (24) to said telecontrol input (22) and/or an instruction signal (25) to said bus connection (21).

2. Cable TV system according to claim 1 characterised in that each of said terminals (13) is identified by an address.

3. Cable TV system according to the preceding claim characterised in that said control unit (6) introduces an address into said control signal (7), said address preceding control information.

4. Cable TV system according to the preceding claim characterised in that each of said terminals (13) comprises means for recognising said address and receiving said control information only if this address is its own address.

5. Cable TV system according to the preceding claim characterised in that it comprises a return channel comprising a modulator (27) receiving a return message (26) and producing a return signal (28), in that the selector circuit (29) injects said return signal into the network (10) and in that it comprises means for separating said control signal (7) from said return signal (28) intended to be applied to the control unit (6).

6. Cable TV system according to the preceding claim, characterized in that a terminal (13) produces a return signal (28) after having been authorized by said control unit (6).
